# EUROPÄISCHE PATENTSCHRIFT

(11) **EP 2 119 218 B1**
(45) Veröffentlichungstag und Bekanntmachung des Hinweises auf die Patenterteilung: **05.01.2011**
(21) Anmeldenummer: 09714290.5
(22) Anmeldetag: 27.02.2009
(51) Int. Cl.: H04N 1/32, B42D 15/10

(54) **VERFAHREN UND VORRICHTUNG ZUM HERSTELLEN VON SICHERHEITS- UND/ODER WERTDRUCKSTÜCKEN**
METHOD AND APPARATUS FOR THE PRODUCTION OF PRINTED SECURITY AND/OR VALUABLE PRODUCTS
PROCÉDÉ ET SYSTÈME POUR FABRIQUER DES IMPRIMÉS DE SÉCURITÉ ET/OU DE VALEUR

(30) Priorität: 29.02.2008 DE 102008012425
(43) Veröffentlichungstag der Anmeldung: 18.11.2009
(73) Patentinhaber: Bundesdruckerei GmbH, 10969 Berlin (DE)
(72) Erfinder: PFLUGHOEFFT, Malte, Dr., 13347 Berlin (DE); MATHEA, Arthur, 14199 Berlin (DE); MUTH, Oliver, Dr., 12277 Berlin (DE)
(74) Vertreter: Patentanwälte Bressel und Partner
(86) Internationale Anmeldenummer: PCT/EP2009/001604
(87) Internationale Veröffentlichungsnummer: WO 2009/106369

(56) Entgegenhaltungen:
- US-A1- 2002 105 568
- US-A1- 2003 072 037

## Beschreibung

Die Erfindung betrifft ein Verfahren und eine Vorrichtung zum Herstellen von Sicherheits- und/oder Wertdruckstücken, insbesondere von individualisierten Sicherheits- und/oder Wertdruckstücken.

Beim Wert- oder Sicherheitsdruck werden Dokumente bedruckt, um auf dem Dokument Druckinformationen abzuspeichern. Hierbei wird das Wert- oder Sicherheitsdokument selbst oder beispielsweise ein Bestandteil, insbesondere ein Substrat oder eine Schicht, bedruckt. Im Folgenden wird der bedruckte Gegenstand allgemein als Druckstück bezeichnet. Eine Ausführung des Drucks und eine Auswahl der Druckinformation erfolgt so, dass ein Verfälschen, Nachahmen und/oder Kopieren durch nicht autorisierte Dritte unmöglich ist oder zumindest erschwert wird. Eine Möglichkeit, eine Fälschungs- und Kopiersicherheit zu erhöhen besteht darin, individualisierende Druckinformationen zu verwenden. Dies bedeutet, dass jedes Sicherheits- und/oder Wertdokument individuelle Informationen umfasst. Diese sind vorzugsweise bei einem Personaldokument beispielsweise individualisierend für die Person, für die das Dokument ausgestellt wird. Das bedruckte Druckstück stellt ein Sicherheitselement dar, welches dazu dient, das Sicherheits- und/oder Wertdokument gegen eine Fälschung und/oder ein Kopieren zu sichern.

Aus dem Stand der Technik ist eine Vielzahl von unterschiedlichen Druckverfahren bekannt, die im Sicherheits- und/oder Wertdokumentendruck verwendet werden. Für eine Individualisierung der Sicherheits- und/oder Wertdokumente, insbesondere wenn grafische Muster, beispielsweise Passbilder und/oder biografische Daten, und/oder weitere geometrische Daten auf ein Druckstück aufgedruckt werden sollen, eignen sich aus verfahrenstechnischen und Kostengründen bei einer Großserienherstellung nur digitale Druckverfahren.

Unter dem Begriff Digitaldruck oder digitales Druckverfahren werden Druckverfahren zusammengefasst, bei denen Druckinformationen, aus denen ein Druckbild ausgebaut wird, direkt von einem Computer zu einer Druckeinrichtung übertragen werden und ein Drucken von der Druckeinrichtung ohne Verwendung einer statischen Druckform ausgeführt wird. Digitale Druckeinrichtungen umfassen beispielsweise elektrofotografische Drucksysteme, Tintenstrahldrucksysteme, Thermodrucksysteme usw.

Beim Digitaldruck wird ein Druckbild in der Regel aus einer Vielzahl von Bildpunkten, die auch als Pixel bezeichnet werden und relativ zueinander in einer zweidimensionalen Fläche angeordnet sind, ausgebaut. Hierbei sind Drucksysteme und Druckverfahren bekannt, bei denen nur eine Farbformulierung verwendet wird und auf das Druckstück aufgebracht wird. Die Farbformulierung ruft hierbei einen Grundfarbeindruck bei einem menschlichen Betrachter hervor, dessen Intensität durch eine aufgebrachte Menge der Farbformulierung pro Fläche des Druckstücks oder Druckerzeugnisses variiert werden kann. Ein handelsüblicher Schwarz-Weiß-Laserdrucker ist beispielsweise in der Lage, unterschiedliche Grautöne und Schwarz auf ein Druckstück, welches insbesondere ein Papiersubstrat umfasst, zu drucken.

Werden mehrere Farbformulienrngen verwendet, so können auch mehrfarbige und bunte Druckbilder erzeugt werden. Um ein nahezu vollfarbiges Druckbild zu erzeugen, mit dem ein Großteil des für den menschlichen Betrachter wahrnehmbaren Farbraums darstellbar ist, reichen in der Regel drei Farbtöne, d.h. drei Farbformulierungen, aus. Hierbei werden die unterschiedlichen Farbtöne des Farbraums über eine Farbsubtraktionen der drei entsprechend gewählten Farbformulierungen bzw. Farbtöne erzeugt. Ober eine Intensität, d.h. Menge der Farbformulierung pro Flächeneinheit der einzelnen verschiedenen Farbformulierungen, kann jeder Farbton des aufgespannten Farbraums dargestellt werden.

Im Stand der Technik sind unterschiedliche Farbsysteme bekannt, die einen Farbraum aufspannen. Im Druckbereich wird häufig ein so genanntes Cyan-Magenta-Gelb-Farbsystem (Cyan-Magenta-Yellow-Farbsystem - CMY-Farbsystem) verwendet. Ein anderes, insbesondere bei additiver Farbmischung verwendetes Farbsystem verwendet die Farben Rot, Grün und Blau. Additive Farbsysteme finden sich bei Selbstleuchtem wie z.B. Monitoren, Bildschirmen etc. oder z.B. bei Fluoreszenzfarben wieder.

Da sich Schwarz- und Grautöne in CMY-Farbsystemen häufig nur unbefriedigend erzeugen lassen und darüber hinaus Schwarz häufig als separate Druckfarbe verwendet wird, werden die Farbsysteme häufig um einen vierten Farbton, nämlich Schwarz, ergänzt. Solche digitalen Druckeinrichtungen, die als Tintenstrahldrucker oder Laserdrucker ausgebildet sein können, sind dem Fachmann seit Jahren gut bekannt. Ihre grundlegenden Prinzipien werden hier daher nicht erläutert und als bekannt vorausgesetzt.

Um fotorealistische Druckbilder einfacher herstellen zu können, sind im Stand der Technik Verfahren entwickelt worden, bei denen neben den intensiven Farben des Farbsystems helle Farbtöne einzelner oder aller Farbtöne zusätzlich eingesetzt werden. Aus der WO 00/47418 sind beispielsweise eine Vorrichtung und ein Verfahren zur mehrstufigen Tintenmischung unter Verwendung von verdünnten und gesättigten Farbtinten für Tintenstrahldrucker bekannt. Darüber hinaus ist es bekannt, den mit einem Farbsystem erzeugbaren Farbraum zu erweitern, indem mindestens eine zusätzliche Farbe, d.h. die Farbformulierung, aufgenommen wird, die außerhalb des Farbraums liegt, der mit den "Grundfarben" des Farbsystems darstellbar ist. Ein solches System ist beispielsweise aus der US 5,892,891 bekannt.

Aus der DE 10 2004 001 937 A1 ist ein Verfahren zur Reproduktion von Sonderfarben mit Primärdruckfarben und Sekundärdruckfarben bekannt. Eine Reproduktion von Sonderfarben wird mit einer Kombination der Primärdruckfarben Cyan, Magenta, Gelb, Schwarz (CMYK) und mindestens einer Sekundärdruckfarbe Rot, Grün, Blau (RGB) vorgenommen. Eine erste Testform wird mit den Primärdruckfarben gedruckt und farbmetrisch ausgemessen. Weitere Testformen, in denen eine der bunten Primärdruckfarben durch eine im Wesentlichen komplementäre Sekundärdruckfarbe ersetzt wird, werden gedruckt und farbmetrisch ausgemessen. Dann wird aus den Messdaten jeder Testform je ein ICC-Farbprofil berechnet. Für jede zu reproduzierende Sonderfarbe werden die Druckfarbenantelle der ICC-Farbprofile ermittelt und das ICC-Farbprofil bestimmt, mit dem die geringste Abweichung zwischen der Sonderfarbe und der reproduzierten Farbe erreicht wird. Die dazu gehörende Druckfärbenkombination wird für die Reproduktion der Sonderfarbe ausgewählt. Das Verfahren ermöglicht die Reproduktion beliebig vieler Sonderfarben in einem Druckerzeugnis mit vier Primärdruckfarben und maximal drei Sekundärdruckfarben. Ein Farbprofil gibt eine Zuordnung der beim Druckprozess verwendeten Farben zu einem geräteunabhänglgen Farbraum an. Die Definition und Datenformate für Farbprofile sind vom International Color Consortium (ICC) in dem Standard Specification ICC.1: 2003-09 festgelegt.

Aus der US 2002/0105568 A1 ist eine Verfahren zum Behandeln eines Substrats bekannt, bei dem eine Treibmittel durch einen Kanal geschickt und auf das Substrat gerichtet wird. Hierdurch wird das Substrat markiert. Beschrieben ist ferner eine Vor- und Nachbehandlung des Substrats. Ferner ist beschreiben, unterschiedliche Markierungs- und Behandlungsmaterialien in den Kanal einzubringen und zu mischen.

Bei der nicht digitalen Wert- und Sicherheitsdrucktechnik ist es darüber hinaus bekannt, so genannte metamere Farben einzusetzen, die bei einer einfachen Sichtprüfung bei einem menschlichen Betrachter denselben Farbeindruck hervorrufen, jedoch mindestens ein physikalisches Merkmal aufweisen, in dem sie sich unterscheiden. Bei Auswertung dieses physikalischen Merkmals sind diese metameren Farben voneinander zu unterscheiden. Typische Verfahren zur Auswertung von metameren Farben verwenden zum Beispiel verschiedene Lichtquellen oder Filter, sodass die Betrachtung mit einem vom Sonnenspektrum abweichenden spektralen Verlauf erfolgt beziehungsweise, sodass der spektrale Verlauf der ersten und zweiten Betrachtung sich unterscheidet

### Technisches Problem der Erfindung

Der Erfindung liegt das technische Problem zugrunde, ein verbessertes Verfahren sowie eine verbesserte Druckvorrichtung zum Herstellen von Sicherheits- und/oder Wertdruckstücken zu schaffen, die mit Hilfe von handelsüblichen Digitaldruckvorrichtungen nicht nachgeahmt, verfälscht und/oder kopiert werden können.

### Definition

Ein Sicherheitsmerkmal ist eine Struktur, die nur mit (gegenüber einfachem Kopieren) erhöhtem Aufwand oder gar nicht unautorisiert herstellbar bzw. reproduzierbar und/oder verfälschbar ist.

Druckinformationen umfassen den Informationsgehalt, der einem Druckbild entnehmbar sein soll. Soll beispielsweise ein farbiger Kreis gedruckt werden, so umfassen die Druckinformationen mindestens eine Angabe, dass es sich bei dem zu druckenden Objekt um einen Kreis handelt, Angaben zu einer Platzierung eines Mittelpunkts des Kreises, Angaben zu einem Radius des Kreises (oder zu einem Durchmesser) sowie Angaben zu der Farbe, mit der der Kreis gedruckt werden soll. In der Regel werden die Druckinformationen bei einem digitalen Druckverfahren Angaben über ein Muster umfassen.

Ein Muster besteht typischerweise aus einer Vielzahl nebeneinander angeordneter Mustereinheiten bzw. Pixel. Die Mustereinheiten bzw. Pixel eines Musters sind einander zugeordnet und in definierter Weise lateral zueinander angeordnet, typischerweise in Zweiraumdimensionen. Die Mustereinheiten sind in der Regel gleich beschaffen.

Als Sicherheits- und/oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten, Haftetiketten (z.B. zur Sicherung). Solche Sicherheits- und/oder Wertdokumente weisen typischerweise ein Druckstück auf, welches ein Substrat umfasst, das mit einer Druckschicht bedruck ist. Optional ist in einem Sicherheits- und/oder Wertdokument über dem Druckstück eine transparente Deckschicht angeordnet. Ein Substrat ist eine Trägerstruktur, auf welcher die Druckschicht aufgebracht wird. Als Materialien für ein Substrat kommen alle fachüblichen Werkstoffe, insbesondere solche auf Papier- und/oder Kunststoffbasis, in Frage.

Ein bedrucktes Substrat wird als Druckstück bezeichnet.

Ein Code bzw. Muster ist individualisierend, wenn er einzigartig für eine Person oder einen Gegenstand oder eine Gruppe von Personen oder Gegenständen aus einer größeren Gesamtmenge von Personen oder Gegenständen ist. Ein für eine Gruppe von Personen innerhalb einer Gesamtmenge der Einwohner eines Landes individualisierender Code ist beispielsweise die Stadt des Wohnortes. Ein für eine Person individualisierender Code ist beispielsweise die Nummer eines Personalausweises oder das Passbild. Ein für eine Gruppe von Geldscheinen innerhalb einer Gesamtmenge der Geldscheine individualisierender Code ist die Wertigkeit. Für einen Geldschein individualisierend ist eine Seriennummer. Beispiel für nicht individualisierende Codes bzw. Muster sind ein Wappen, Siegel, Hoheitszeichen usw. für Sicherheits- und/oder Wertdokumente eines Hoheitsgebiets.

Der Begriff Farbe wird im Rahmen der Erfindung als Synonym für einen Farbton verwendet, der von einem menschlichen Betrachter wahrgenommen wird. Eine Farbformulierung ist eine Substanz oder Zusammensetzung, die im verdruckten Zustand auf einem Substrat einen Farbeindruck hervorruft. Der Farbformulierung wird in der Regel die Farbe zugeordnet, deren Farbeindruck sie im verdruckten Zustand hervorruft. Einer Fläche eines Druckstücks kann eine Farbe bzw. ein Farbton zugeordnet werden, der durch ein Aufbringen eine unterschiedliche Farben im verdruckten Zustand hervorrufender Farbformulierungen hervorgerufen wird. Im Digitaldruck werden die unterschiedlichen verwendeten Farbformulierungen in der Regel nicht überlappend auf das Substrat des Druckstücks aufgebracht, jedoch mit einer räumlichen Ausdehnung, die wesentlich kleiner als eine Auflösung des Betrachters des Druckstücks ist. Um ein farbiges Muster, welches eine bestimmte Anzahl von Mustereinheiten oder Pixeln umfasst, die farbig sind, zu drucken, werden beim Digitaldruck je Bildeinheit bzw. Pixel mehrere, in der Regel eine Vielzahl von Subpixeln, gedruckt, die jeweils die Farbe eines Farbtons eines Farbsystems aufweisen.

Als bunt wird ein Druckbild bezeichnet, wenn es mindestens zwei durch einen menschlichen Betrachter unterscheidbare Farbeindrücke hervorruft. Ein einfarbiges Druckstück ist im Sinne dieser Definition nicht bunt, auch dann nicht, wenn der Farbeindruck durch unterschiedlich farbige Subpixel aufgrund einer Farbsubtraktion hervorgerufen ist, wobei die Subpixel eine Größe aufweisen, dass diese durch den Betrachter bei der normalen Sichtprüfung nicht wahrgenommen werden.

Unter einer Sichtprüfung wird hier eine visuelle Prüfung eines Druckstücks durch einen menschlichen Betrachter aus einem dem Druckstück angemessenen Abstand unter gewöhnlichen Beleuchtungsbedingungen, d.h. entweder unter Tageslicht (Sonnenlicht) oder unter Beleuchtung mit einem thermischen Strahler (Glühlampe) oder mit einer ein kontinuierliches Spektrum nachbildenden Leuchtstoffröhre, ohne zur Hilfenahme technischer Hilfsmittel verstanden. Gewöhnliche nichtgetönte Brillengläser, werden hierbei nicht als Hilfsmittel angesehen.

Ein Farbsystem umfasst mehrere Grundfarben, in der Regel drei Grundfarben, mit denen über Farbmischung Farben in einem Farbraum dargestellt werden können. Bekannte Farbsysteme sind das Cyan-Magente-Gelb-Farbsystem (CMY-Farbsystem), welches häufig zusätzlich um die Farbe Schwarz ergänzt wird und dann als CMYK-Farbsystem bezeichnet wird. Ein anderes bekanntes Farbsystem ist das Rot-Grün-Blau-Farbsystem, welches auch als RGB-Farbsystem bezeichnet wird, weiches vor allem aus der additiven Farbmischung bekannt ist, zum Beispiel bei Displays oder Fluoreszenfarben.

Als sichtbarer Wellenlängenbereich wird der Wellenlängenbereich des elektromagnetischen Spektrums bezeichnet, der durch das menschliche Auge wahrnehmbar ist.

### Grundzüge der Erfindung bevorzugte Ausführungsform

Die Erfindung schafft eine Druckvorrichtung zum Herstellen von Sicherheits- und/oder Wertdruckstücken, umfassend eine Erfassungseinrichtung zum Erfassen von ersten Druckinformationen, eine Steuereinheit, mindestens ein erstes Reservoir, in dem mindestens eine erste Farbformulierung vorgehalten ist, und eine digitale Druckeinrichtung, mit der gesteuert durch die Steuereinheit die mindestens eine Farbformulierung auf ein Substrat aufbringbar ist, um das Substrat mit den ersten Druckinformationen zu bedrucken und hierdurch das Sicherheits- und/oder Wertdruckstück zu erzeugen, wobei mindestens ein zweites Reservoir mit der digitalen Druckeinrichtung gekoppelt ist, in dem mindestens eine zweite Farbformulierung vorgehalten ist, die sich von der mindestens einen ersten Farbformulierung unterscheidet und in einem verdruckten Zustand mindestens ein physikalisches Unterscheidungsmerkmal zu der verdruckten mindestens einen ersten Farbformulierung aufweist, und die Erfassungseinrichtung ausgebildet ist, zusätzlich zweite Druckinformationen zu empfangen, und die Steuereinheit ausgebildet ist, die digitale Druckeinrichtung beim Bedrucken unter Verwendung der mindestens einen zweiten Farbformulierung so anzusteuern, dass die ersten Druckinformationen und die zweiten Druckinformationen in dem Druckstück gespeichert werden und für einen menschlichen Betrachter des bedruckten Druckstücks bei einer Sichtprüfung ausschließlich die gedruckten Druckinformationen in der Weise wahrnehmbar sind, die sich bei einer Bedruckung ohne Verwendung der mindestens einen zweiten Farbformulierung ergäbe, und die zweiten Druckinformationen bei einer Auswertung des bedruckten Druckstücks unter Ausnutzung des mindestens einen physikalischen Unterscheidungsmerkmals wahrnehmbar ist. Es ist somit vorgesehen, Sicherheitsdruckstücke und/oder Wertdruckstücke mit einem Verfahren herzustellen, welches ein Erfassen von ersten Druckinformationen, ein Verhalten mindestens einer ersten Farbformullerung und Ansteuern einer digitalen Druckeinrichtung umfasst, um mittels Digitaldruck ein Substrat mit den ersten Druckinformatianen zu bedrucken, und hierdurch das Sicherheitsdruckstück und/oder Wertdruckstück zu erzeugen, wobei mindestens eine zweite Farbformlulierung vorgehalten wird, die sich von der mindestens einen Farbformulierung unterscheidet und in einem verdruckten Zustand mindestens ein physikalisches Unterscheidungsmerkmal zu der verdruckten mindestens einen ersten Farbformulierung aufweist, und zusätzlich zweite Druckinformationen erfasst werden und die digitale Druckeinrichtung so angesteuert wird, dass unter Verwendung der mindestens einen zweiten Farbformulierung die erste Druckinformation und die zweite Druckinformation auf das Druckstück zur Speicherung gedruckt werden, so dass für einen menschlichen Betrachter des bedruckten Druckstücks bei einer Sichtprüfung ausschließlich die Druckinformationen in der Weise wahrnehmbar sind, die sich bei einer Bedruckung ohne Verwendung der mindestens einen zweiten Farbformulierung ergäbe, und die zweiten Druckinformationen bei einer Auswertung des bedruckten Druckstücks unter Ausnutzung des mindestens einen physikalischen Unterscheidungsmerkmals wahrnehmbar sind. Die Erfindung bietet den Vorteil, dass eine Druckvorrichtung und ein Druckverfahren geschaffen werden, die Druckstücke erzeugen, die ein für den Betrachter, der lediglich eine Sichtprüfung durchführt, nicht erkennbares Sicherheitsrnerkrnal enthalten.

Gemäß der Erfindung ist vorgesehen, dass zusätzlich ein oder mehrere weitere erste Reservoirs vorgesehen sind, die weitere erste Fartifonnulierungen umfassen bzw. vorhalten, die sich hinsichtlich des mindestens einen physikalischen Merkmals im verdruckten Zustand von der mindestens einen zweiten Farbformulierung unterscheiden. Durch die Verwendung mehrerer erster Farbformulierungen ist es möglich, mehrfarbige Sicherheitsdruckstücke oder Wertdruckstücke herzustellen. Ferner ist gemäß der Erfindung vorgesehen, dass die mindestens eine zweite Farbformulierung einen metameren Farbeindruck zu dem Farbton hervorruft, der in dem Farbraum liegt, der mittels der mindestens einen und der einen oder den mehreren weiteren ersten Farbformulierungen darstellbar ist oder dargestellt wird. Ein solcher Farbton kann beispielsweise über eine Farbformulierung hergestellt werden, die ein oder mehrere Farbpigmente oder allgemeiner Farbmittel umfasst, die im verdruckten Zustand einen Farbeindruck hervorrufen, der in dem Farbraum liegt, der von der mindestens einen und der einen oder den mehreren weiteren ersten Farbformulierungen gemeinsam aufgespannt wird. Das eine oder die mehreren Pigmente, die die zweite Farbformulierung umfasst, sind nicht identisch zu den Farbpigmenten der mehreren ersten Farbformulierungen.

Es ist somit vorgesehen, dass bei einer Sichtprüfung ohne Hilfsmittel unter Sonnenlicht nur die erste Druckinformation wahrnehmbar ist, und zwar so, als wenn diese ausschließlich unter Verwendung der mindestens einen ersten Farbformulierung und/oder der einen oder mehreren weiteren ersten Farbformulierungen gedruckt wäre. Es ergibt sich, dass ein Teil der ersten Druckinformation mittels der mindestens einen zweiten Farbformulierung gedruckt sein kann. Die zweite Druckinformation ist erst bei Auswertung des mindestens einen physikalischen Unterscheidungsmerkmals wahrnehmbar. Bei der Auswertung ist also wahrnehmbar, welche Bereiche mit der mindestens einen zweiten Farbformulierung bedruckt sind.

Bei einer bevorzugten Ausführungsform wird als die mindestens eine zweite Farbformullerung eine zu der mindestens einen Farbformulierung metamere Farbformullerung vorgehalten. Eine Farbe ist metamer zu einer anderen Farbe, wenn sie für einen menschlichen Betrachter denselben Farbeindruck erzeugt.

Die erste Farbformulierung kann beispielsweise eine schwarze Farbe sein, die im infraroten Wellenlängenbereich nicht absorbierend ist. Die hierzu metamere mindestens eine zweite Farbformulierung kann eine schwarze Farbe sein, die Rußpartikel umfasst und eine Absorption im infraroten Spektralbereich aufweist. Bei einer normalen optischen Sichtprüfung mit Licht im sichtbaren Wellenlängenbereich kann der Betrachter nicht unterscheiden, welche der beiden Farbformulierungen zum Erzeugen schwarzer Bildpunkte verwendet wurde. Bei einer Untersuchung der Absorption im infraroten Wellenlängenbereich sind jedoch die Bildpunkte voneinander unterscheidbar, die mit den unterschiedlichen Farbformulierung gedruckt sind.

Bei einer Ausführungsform wird die Druckinformation in der Weise aufgebracht, dass ein Druckerzeugnis entsteht, das bei einer Sichtprüfung ohne Hilfsmittel einen bunten Farbeindruck bei einem menschlichen Betrachter hervorruft.

Als besonders vorteilhaft hat es sich herausgestellt, die zweite Druckinformation mit der ersten Druckinformation zu verknüpfen. Hierunter wird im Zusammenhang der Erfindung verstanden, dass die zweiten Druckinformationen zumindest teilweise an derselben Stelle auf dem Druckstück aufgebracht werden wie die ersten Druckinformationen. Hierbei werden die ersten und die zweiten Druckinformationen vorteilhafterweise so aufeinander abgestimmt, dass beispielsweise alle oder einige Bereiche eines bestimmten Farbtons, der mit der mindestens einen ersten Farbformulierung oder mit der mindestens einen und der einen weiteren oder mehreren weiteren ersten Farbformulierungen erzeugbar ist, durch denselben Farbton ersetzt wird, der unter Verwendung der mindestens einen zweiten Farbformulierung erzeugbar ist.

Es wird angemerkt, dass die erste Druckinformation nicht ausschließlich mit der mindestens einen ersten Farbformulierung gedruckt werden muss, vielmehr ist es in der Regel so, dass ein Teil der bei der Sichtprüfung ohne Hilfsmittel wahrnehmbaren Information mittels der mindestens einen zweiten Farbformulierung gedruckt ist. In diesem Fall wird die zweite Druckinformation an Stellen, an denen ein Teil der ersten Druckinfomation gespeichert ist, im Druckerzeugnis über die verdruckte mindestens eine zweite Farbformulierung gespeichert. Bei der Sichtprüfung ohne Hilfsmittel ist der mittels der mindestens einen zweiten Farbformulierung bedruckte Anteil nicht von anderen Bestandteilen der Druckinformation unterscheidbar und wird als Anteil der ersten Druckinformationen wahrgenommen.

Bei einer Ausführungsform ist vorgesehen, dass als physikalisches Unterscheidungsmerkmal eine Remission und/oder Transmission im sichtbaren Wellenlängenbereich bei einer Beleuchtung mit Licht im Sichtbaren Wellenlängenbereich verwendet wird.

Um eine Vielzahl von verschiedenen Farbtönen auf diese Weise metamer darstellen zu können, ist gemäß einer bevorzugten Ausführungsform der Erfindung daher vorgesehen, dass zusätzlich ein oder mehrere weitere zweite Reservoirs vorgesehen sind, die weitere zweite Farbformulierungen umfassen, die sich im verdruckten Zustand hinsichtlich des physikalischen Unterscheidungsmerkmals oder eines weiteren physikalischen Unterscheidungsmerkmals von der mindestens einen ersten Farbformulierung und/oder den weiteren ersten Farbformulierungen unterscheiden. Bei einer solchen Ausführungsform ist es möglich, einen metameren Farbton in einem Bereich des bedruckten Sicherheitsdruckstücks oder Wertdruckstücks durch Verwendung der mindestens einen zweiten Farbe und der einen oder den mehreren weiteren zweiten Farbformulierungen zu erzeugen. Bei einer solchen Ausführungsform stehen als metamere Farbtöne all jene Farbtöne zur Verfügung, die in einer Schnittmenge der Farbräume liegen, die von der mindestens einen ersten Farbformulierung und der einen oder den mehreren weiteren ersten Farbformulierungen einerseits aufgespannt wird und dem anderen Farbraum, der von der mindestens einen zweiten Farbformulierung und der einen oder den mehreren weiteren zweiten Farbformulierungen aufgespannt wird. Je größer die Schnittmenge der beiden Farbräume ist, die von den ersten Farbformulierungen und den zweiten Farbformulierungen aufgespannt werden, desto einfacher können die ersten und die zweiten Informationen miteinander verknüpft werden, weil die Orte, an denen die zweiten Druckinformationen dargestellt werden können, zunehmen. Steht in einem vollfarbigen Bild beispielsweise nur eine metamere Farbe bzw. ein metamerer Farbton zum Darstellen der zweiten Druckinformationen in dem Bereich zur Verfügung, in dem das farbige Bild der ersten Druckinformationen dargestellt ist, so können die zweiten Druckinformationen nur über ein selektives Ersetzen dieses einen Farbtons codiert bzw. dargestellt werden. Sind hingegen eine Vielzahl von Farbtönen selektiv durch einen metameren Farbton austauschbar, so erhöht sich die Anzahl der Orte, die zur Codierung verwendet werden können.

Bei einer bevorzugten Weiterbildung der Erfindung sind somit die ersten Farbformulierungen aus einem ersten Farbsystem und die zweiten Farbformulierungen aus einem zweiten Farbsystem ausgewählt, wobei mittels der beiden Farbsysteme darstellbare Farbräume eine nicht leere Schnittmenge umfassen und die zweiten Druckinformationen in Farbtönen aus der Schnittmenge dieser Farbräume gedruckt werden, wobei die zweiten Farbformulierungen zur Erzeugung dieser Farbtöne verwendet werden. Die zweite Druckinformation wird mit Farbtönen gedruckt, die mittels der zweiten Farbformulierungen erzeugt sind. Es versteht sich, dass dieselben Farbtöne auch mittels der ersten Farbformulierungen erzeugt und verwendet sein können (oder erzeugt und verwendet werden können), und zwar an den Stellen, an denen ausschließlich die ersten Druckinformationen gespeichert sind (oder gespeichert werden).

Bei einer bevorzugten Ausführungsform ist die erste Druckinformation bunt und umfasst mindestens einen Farbton, der von den Farbtönen abweicht, die durch eine der ersten oder eine der zweiten Farbformulierungen hervorgerufen werden, wenn diese großflächig einzeln verdruckt werden, und wobei zumindest ein Teil der zweiten Druckinformation über diesen mindestens einen Farbton in dem Druckerzeugnis gespeichert wird oder ist.

Das erste Farbsystem ist bei einer bevorzugten Ausführungsform ein Cyan-Magenta-Gelb-(CMY-) oder Cyan-Magenta-Gelb-Schwarz-Farbsystem (CMYK-Farbsystem) und das zweite Farbsystem ein Rot-Grün-Blau- (RGB-) oder Rot-Grün-Blau-Schwarz-Farbsystem (RGBK-Farbsystem) oder umgekehrt.

Bei einer weiteren Ausführungsform ist vorgesehen, dass erste Farbsystem ein Cyan-Magenta-Gelb- (CMY-) oder Cyan-Magenta-Gelb-Schwarz-Farbsystem (CMYK-Farbsystem) und das zweite Farbsystem ein Cyan'-Magenta'-Gelb'- (C'M'Y'-) oder Cyan'-Magenta'-Gelb'-Schwarz'-Farbsystem (C'M'Y'K'-Farbsystern) oder umgekehrt sind. Hierbei unterscheidet sich der von dem ersten Farbsystem aufgespannte Farbraum (Gamut) von dem des zweiten Farbsystems. Das Cyan' kann beispielsweise gegenüber dem Cyan blaustichig sein, das Magenta' gegenüber Magenta beispielsweise rotstichig und das Gelb' gegenüber Gelb beispielsweise grünstichig sein. Schwarz und Schwarz' können sich beispielsweise hinsichtlich ihres Absorptionsverhaltens im infraroten Wellenlängenbereich unterscheiden.

Um eine Nachahmung weiter zu erschweren ist bei einer Ausführungsform vorgesehen, dass die mindestens eine erste Farbformulierung die die weitere oder weiteren ersten Farbformulierungen nach einer Rasterart und die mindestens eine zweite Farbformulierung oder die weitere oder weiteren zweiten Farbformulierungen nach einer zweiten Rasterart aufgebracht werden, wobei die erste Rasterart ein Frequenzraster und die zweite Rasterart ein Amplitudenraster sind oder umgekehrt. Bei einer Aufbringung der Farben gemäß einem Frequenzraster sind die einzelnen aufgebrachten Subpixel oder Pixel einer Farbformulierung gleich groß. Um eine Farbintensität oder einen Farbeindruck zu erzeugen, unterscheidet sich die Anzahl der Bildpunkte oder Pixel bzw. Subpixel dieser Farbformulierung. Bei einem Amplitudenraster ist hingegen eine Größe bzw. die an einem Ort aufgebrachte Menge der Farbformulierung in Abhängigkeit von dem gewünschten Farbeindruck variiert.

Bei der digitalen Druckvorrichtung handelt es sich vorzugsweise um eine Tintenstrahldruckvorrichtung oder eine Laserdruckvorrichtung. Diese beiden Technologien sind ausgereift und haben sich als besonders zuverlässig und leicht handhabbar erwiesen.

Die Merkmale des erfindungsgemäßen Verfahrens weisen dieselben Vorteile wie die Merkmale der erfindungsgemäßen Druckvorrichtung auf.

Nachfolgend wird die Erfindung anhand bevorzugter Ausführungsbeispiele näher erläutert. Hierbei zeigen:
- Fig. 1: eine schematische Darstellung einer Ausführungsform einer Druckvorrichtung;
- Fig. 2: eine schematische Darstellung einer weiteren Ausführungsform einer Druckvorrichtung;
- Fig. 3: eine schematische Darstellung der von verschiedenen Farbsystemen aufgespannten Farbräume;
- Fig. 4: eine schematische Darstellung eines bedruckten Druckstücks;
- Fig. 5: eine weitere Darstellung eines bedruckten Druckstücks mit individualisierenden zweiten Druckinfomationen; und
- Fg. 6: eine weitere Darstellung eines bedruckten Druckstücks mit individualisierenden ersten und zweiten Druckinformationen, die miteinander verknüpft sind.

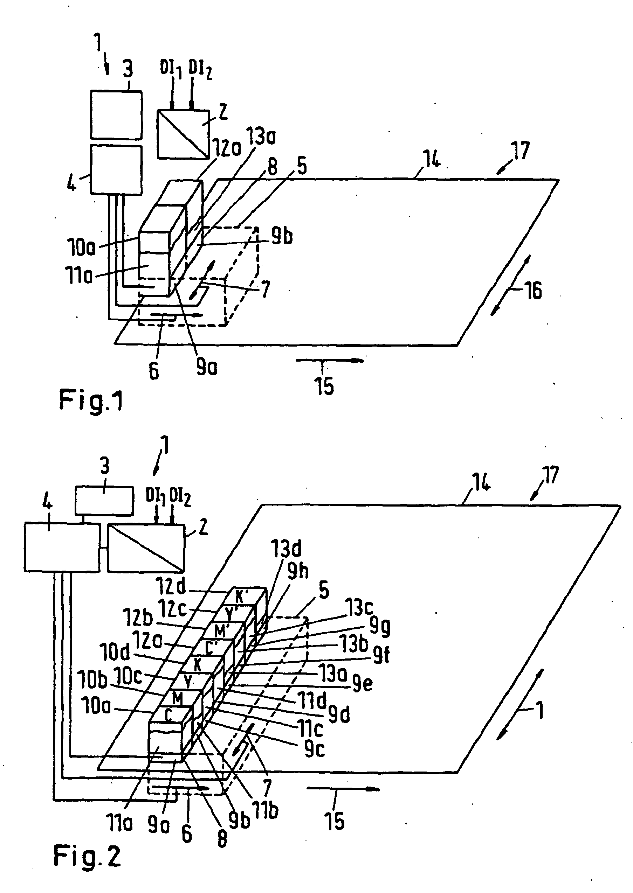

In Fig. 1 ist schematisch eine Druckvorrichtung 1 dargestellt. Diese umfasst eine Erfassungseinrichtung 2. Die Erfassungseinrichtung 2 kann beispielsweise als Schnittstelle ausgebildet sein. Die Erfassungseinrichtung 2 ist ausgebildet, erste Druckinformationen und zweite Druckinformationen zu erfassen bzw. zu empfangen. Diese Druckinformationen können getrennt oder bereits miteinander verbunden erfasst werden. Die erfassten Druckinformationen werden in der Regel in einem Speicher 3 abgelegt. Eine Steuereinheit 4 steuert anhand der Druckinformationen eine digitale Druckeinrichtung 5. Die digitale Druckeinrichtung 5 ist hier beispielhaft als Tintenstrahidruckeinrichtung ausgebildet. In diesem Falle umfasst die Druckeinrichtung 5 beispielsweise einen Längsantrieb 6, der mittels eines Pfeils angedeutet ist, einen Querantrieb 7, der mittels eines Doppelpfeils angedeutet ist, sowie einen Druckkopf 8. Der Druckkopf 8 umfasst hierbei Teildruckköpfe 9a und 9b. Mit dem Teildruckkopf 9a ist ein erstes Reservoir 10a gekoppelt, in dem eine erste Farbformulierung 11a vorgehalten wird. Mit dem Teildruckkopf 9b ist entsprechend ein zweites Reservoir 12a verbunden, in dem eine zweite Farbformulierung 13a vorgehalten wird. Bei der dargestellten Ausführungsform sind die erste Farbformulierung und die zweite Farbformulierung zueinander metamere Farbformulierungen, d.h., dass die erste Farbformulierung 11a und die zweite Farbformulierung 13a rufen, wenn sie auf ein Substrat 14 gedruckt sind, denselben Farbeindruck bei einer normalen Sichtprüfung bei einem menschlichen Betrachter hervor. Als normale Sichtprüfung wird ein Betrachten des bedruckten Substrats, welches als Druckstück bezeichnet wird, bei gewöhnlichem Tageslicht ohne Zuhilfenahme weiterer technischer Hilfsmittel verstanden. Die zueinander metameren Farbformulierungen weisen jedoch mindestens ein physikalisches Unterscheidungsmerkmal auf, so dass die mit Hilfe der unterschiedlichen Farbformulierungen gedruckten Bereiche des Druckstücks bei Auswertung des physikalischen Unterscheidungsmerkmals voneinander unterschieden werden können.

Rufen die erste Farbformulierung 11a und die zweite Farbformulierung 13a beispielsweise im verdruckten Zustand jeweils einen schwarzen Farbeindruck hervor und ist beispielsweise die erste Farbformulierung so ausgestaltet, dass sie im infraroten Wellenlängenbereich keine Absorption aufweist und die zweite Farbformulierung 13a hingegen eine starke Absorption im infraroten Wellenlängenbereich aufweist, so können Bereiche des Druckstücks (des bedruckten Substrats 14), die mit der ersten Farbformulierung 11a bedruckt sind, von Bereichen unterschieden werden, die mit der zweiten Farbformulierung 13a bedruckt sind.

Alternativ können der zweite Farbformulierung beispielsweise lumineszierende Substanzen zugefügt sein, die eine Lumineszenz bei Bestrahlung des Druckstücks mit UV-Licht in dem Bereich auslösen, in dem die zweiten Druckinformationen codiert sind.

Als erste Druckinformationen werden vorzugsweise Individualisierungsinformationen bzw. individualisierende Informationen auf das Substrat 14 gedruckt Die zweiten Druckinformationen sind so ausgewählt und aufgedruckt, dass sie bei einer gewöhnlichen Sichtprüfung keinen zusätzlichen Informationsgehalt für einen Betrachter hinzufügen. Dies bedeutet, dass die ersten Druckinformationen und die zweiten Druckinformationen sinnvollerweise aufeinander abgestimmt sind. Besonders bevorzugt werden somit die zweiten Druckinformationen örtlich auf dem Substrat 14 an derselben Stelle bzw. in demselben Bereich des Substrats 14 dargestellt, in dem auch die Informationen der ersten Druckinformationen dargestellt sind. Vorzugsweise werden einzelne Bildpunkte der ersten Druckinformationen mit Hilfe der zweiten Farbformulierung ersetzt, um die zweiten Druckinformationen zu speichern. Die zweite Druckinformation kann beispielsweise ein Muster umfassen, welches angibt, welche Positionen auf dem Substrat, sofern sie überhaupt mit einer der beiden Farbformulierungen 11a, 13a bedruckt werden, jeweils mit der zweiten Farbformulierung 13a anstelle der ersten Farbformulierung 11a bedruckt werden. Dieses Grobmuster ist bei einer Sichtprüfung für einen menschlichen Betrachter nicht zu erkennen. Wird hingegen das mindestens eine physikalische Unterscheidungsmerkmal ausgewertet, so ist dieses Grobraster auf einfache Weise zu erkennen. Für einen Fälscher ist somit das Fälschen erheblich erschwert. Werden für die zweiten Druckinformationen ebenfalls individualisierende Angaben verwendet, wird ein Fälschen noch einmal erheblich erschwert.

In einer weiteren Ausführungsform wird nicht die digitale Druckeinrichtung 5 entlang der Längs-15 und Querrichtung 16 des Druckstückes 17 bewegt, sondern die digitale Druckeinrichtung 5 ist statisch und das Druckstück 17 wird unter der digitalen Druckeinrichtung 5 bewegt.

In Fig. 2 ist eine weitere Ausführungsform einer Druckvorrichtung schematisch dargestellt. Gleiche technische Merkmale weisen dieselben Bezugszeichen wie in Fig. 1 auf. Bei dieser Ausführungsform ist die digitale Druckeinrichtung 5 für einen Farbdruck ausgebildet. Der Druckkopf 8 umfasst somit eine größere Anzahl von Teildruckköpfen 9a-9h als bei der Ausführungsform nach Fig. 1. Mit den Teildruckköpfen 9a-9d sind erste Reservoirs 10a-10d verbunden, die jeweils erste Farbformulierungen 11a-11d umfassen. Diese können beispielsweise Farbformulierungen sein, die ein Cyan-Magenta-Gelb-Schwarz-Farbsystem darstellen. Mit den Teildruckköpfen 9e-9h sind jeweils zweite Reservoirs 12a-12d verbunden, die zweite Farbformulierungen 13a-13d umfassen, die beispielsweise ein Cyan'-Magenta'-Gelb'-Schwarz'-Farbsystem darstellen, welches einen Farbraum aufspannt der sich von dem des Cyan-Magenta-Gelb-Schwarz-Farbsystems unterscheidet. Dieses bedeutet, dass sich mindestens Cyan und Cyan' oder Magenta und Magenta' oder Gelb und Gelb' oder Schwarz und Schwarz' voneinander unterscheiden. Vorzugsweise unterscheiden sich alle mit einem Strich gekennzeichneten Farben von den entsprechenden Farben ohne Strich. Beim Bedrucken des Substrats 14 steuert die Steuereinheit 4 die Druckeinrichtung 5 so, dass der Druckkopf 8 mittels des Längsantriebs 6 entlang einer Längsrichtung 15 des Substrats 14 bewegt wird. Während der Bewegung entlang der Längsrichtung 15 wird der Druckkopf 8 in der Regel mit einer höheren Frequenz mittels des Querantriebs 7 entlang einer Querrichtung 16 des Substrats 14 hin und her bewegt, so dass es möglich ist, mit jedem der Teildruckköpfe 9a-9h jeden Punkt des Substrats 14 mit einer dem entsprechenden Teildruckkopf 9a-9h zugeordneten Farbformulierung 11a-11d, 13a-13d zu bedrucken, sofern dies erforderlich ist, um die Druckinfortnationen auf dem Substrat 14 zu speichern. Bei dieser Ausführungsform können sehr viel komplexere zweite Druckinfonnationen in demselben Bereich wie die ersten Druckinformationen abgespeichert werden, ohne einen optischen Eindruck der ersten Informationen bei einer Sichtprüfung zu beeinflussen.

Bei einer Ausführungsform können die Teildruckköpfe 9a-9d, die die ersten Farbformulierungen 11a-11d verdrucken, und die Teildruckköpfe 9e-9h, die die zweiten Farbformulierungen 13a-13d verdrucken so ausgebildet sein, dass sie die Farbformulierungen 11a-11d, 13a-13d nach unterschiedlichen Rastern, beispielsweise einem Frequenzraster einerseits und einem Amplitudenraster andererseits aufbringen.

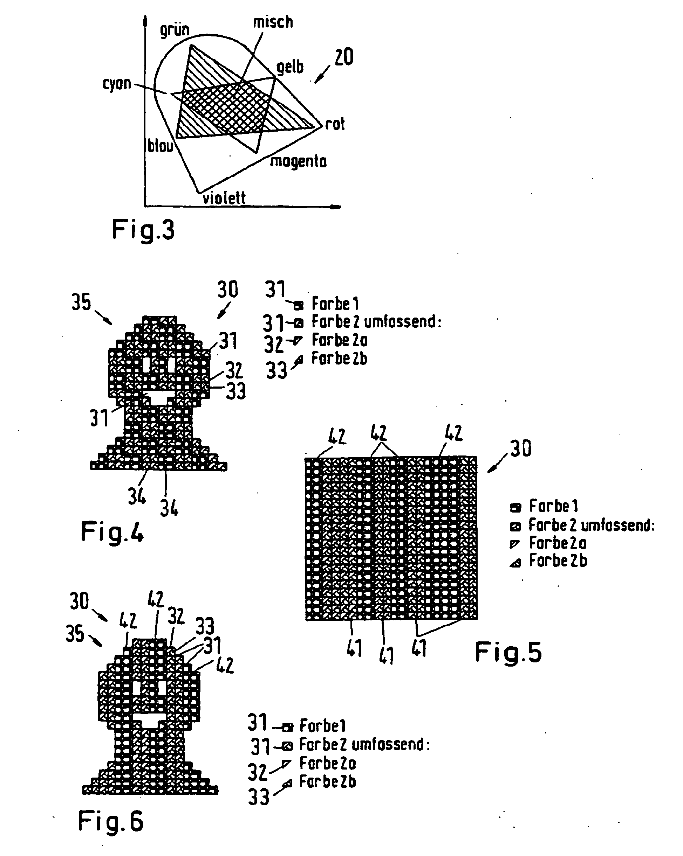

In Fig. 3 ist ein schematisches Farbraumdiagramm 20 dargestellt, in dem jeweils die Schnittmenge der einzelnen Gamuts Cyan-Magenta-Gelb (Schraffur von links unten nach rechts oben) sowie Rot -Grün-Blau (Schraffur von rechts oben nach links unten) dargestellt werden. Die Farbtöne, die in dem gekreuzt schraffierten Bereich liegen, können sowohl von dem ersten Farbsystem CMY als auch von dem zweiten Farbsystem RGB dargestellt werden. Sind die ersten Druckinformationen so beschaffen, dass sie mit Farbtönen aus diesem Schnittmengenbereich der beiden Farbsysteme darstellbar sind, so können die zweiten Druckinformationen einen beliebigen Inhalt darstellen. Hierbei versteht es sich, dass diese Darstellung eine Binärdarstellung in der Weise ist, dass für die einzelnen Bildpunkte, die die zweiten Druckinformationen darstellen, jeweils nur die Information Null (Bildpunkt dargestellt mit ersten dem Farbsystem) und Eins (Bildpunkt dargestellt mit dem zweiten Farbsystem) zur Verfügung stehen.

In Fig. 4 ist eine schematische Ansicht eines Druckstücks 30 gezeigt, bei dem die ersten Druckinformationen eine schematische Abbildung eines Gesichtsbildes 35 umfassen. Das Bild ist aus einzelnen quadratischen Pixel 31 aufgebaut. Den quadratischen Pixeln 31 ist jeweils eine Farbe bzw. ein Farbton zugeordnet, der von einem Betrachter bei einer Sichtprüfung wahrgenommen wird. Die quadratischen Pixel 31 sind mit keiner Farbe, mit einer ersten Farbe oder mit zweiten Farben bedruckt. Diese Zuordnung kann der Legende entnommen werden. Die mit der ersten Farbe/Farbformulierung bedruckten Pixel erzeugen bei einer Sichtprüfung denselben Farbeindruck wie die mit der zweiten Farbe/Farbformulierung bedruckten Pixel. Ein Betrachter nimmt bei einer normalen Sichtprüfung somit nur das Gesichtsbild 35 wahr.

Die Pixel der zweiten Farbe lassen sich in zwei dreieckig dargestellte Subpixel 32, 33 zerlegen. Dies soll andeuten, dass die zweite Farbe beispielsweise zwei Pigmente umfassen kann, die durch Farbmischung denselben Farbeindruck wie die Pigmente der ersten Farbformulierung hervorrufen. Die Pixel der zweiten Farbformulierung sind somit metamer zu den Pixeln der ersten Farbformulierung. Erst bei einer Betrachtung mit technischen Hilfsmitteln lassen sich die einzelnen Pixel unterscheiden. Wird nun eine Sichtprüfung ausgeführt, die beispielsweise eine Folie nutzt, durch die einer der beiden den verschiedenen Subpixeln zugeordneten Farbtöne der zweiten Farbformulierungen gefiltert wird (d.h. beispielsweise ein Farbton eines der zwei Pigmente), so wird es für den menschlichen Betrachter möglich, die Grobstruktur zu erkennen. Hierbei ist erkennbar, dass durch die zweiten Druckinformationen ein schachbrettartiges Muster festgelegt ist. Jeweils vier Pixel sind zu einem "Schachfeld" 34 zusammengefasst.

Es versteht sich für den Fachmann, dass die Pixel, denen ein von dem menschlichen Betrachter wahrnehmbarer Farbton zugeordnet ist, aus Subpixeln bestehen können, die jeweils mit einer Grundfarbe eines Farbsystems bedruckt sind. Der wahrnehmbare Farbton des Pixels ergibt sich dann durch Farbsubtraktionen. In einem solchen Fall können die Pixel der ersten Farbe in Fig. 4 als Pixel einer Sonderfarbe betrachtet werden, die im Farbraum liegt, der von den Farben/Farbformulierungen aufgespannt wird, mit denen die Subpixel der zweiten Farbe/Farbformulierung in Fig. 4 gedruckt sind.

In Fig. 5 ist ein weiteres Beispiel dargestellt, bei dem einem einfarbigen Hintergrund 41ein individualisierender Strichcode 42 überlagert ist Dieser kann beispielsweise eine Codierung einer Ausweisnummer eines Ausweises darstellen, in den das Druckstück 30 eingearbeitet, beispielsweise einlaminiert, wird. Um die Fälschungssicherheit zu erhöhen, kann ferner vorgesehen sein, dass die ersten Farbformulierungen beispielsweise mittels eines Frequenzrasters verdruckt werden und die zweiten Farbformulierungen mittels eines Amplitudenrasters oder umgekehrt. Bei ersterer Druckart sind die einzelnen Druckpixel gleich groß und ein unterschiedlicher Farbeindruck wird durch eine Anzahl der Pixel pro Fläche festgelegt. Bei einem Drucken nach einem so genannten Amplitudenraster unterscheiden sich hingegen die einzelnen aufgebrachten Pixel hinsichtlich ihrer Größe. Im Ergebnis führt dies ebenfalls dazu, dass ein Farbeindruck über eine Menge der ausgebrachten Farbformulierung pro Flächenbereich des bedruckten Substrats festgelegt ist. Dennoch lassen sich diese beiden unterschiedlichen Druckarten bei einer genauen Analyse des Druckstücks unterscheiden und können so zu einer Verifizierung hinsichtlich einer Echtheit eines Druckstücks herangezogen werden.

In Fig. 6 ist der gleiche Strichcode 42 als zweite, individualisierende Druckinformation mit einem Gesichtsbild 35 verknüpft, d.h. mit individualisierenden ersten Druckinformationen. Die Pixel des Gesichtsbilds sind oder werden mit einer der ersten Farbformulierung/Farbe gedruckt. An den Stellen, an denen Informationen des Strichcodes 42 zu drucken sind oder gedruckt werden, ist oder wird das Pixel des Gesichtsbilds durch ein Pixel der zweiten Farbformulierung/Farbe gedruckt. Die erste und die zweite Farbformulierung rufen bei einer Sichtprüfung denselben Wahmehmungseindruck hervor, so dass von einem Betrachter nur das Gesichtsbild 35 wahrgenommen wird. Erste bei einem Filtern beispielsweise eines der Farbtöne eines der Subpixel der zweiten Farbe(n)/Farbformulierung(en) wird für einen Betrachter der Strichcode 42 wahrnehmbar. Das Gesichtsbild 36, d.h. die ersten Druckinformationen, wird so durch den Strichcode 42, die zweiten Druckinformationen, gesichert. Eine Fälschung und/oder Nachahmung des Gesichtbilds bzw. des Druckstücks wird erheblich erschwert. Auch bei dieser Ausführungsform können die erste Farbformulierung und die zweite Farbformulierung nach unterschiedlichen Rastern aufgebracht sein, um eine Fälschungssichemeit weiter zu erhöhten.

Es versteht sich, dass hier nur stark vereinfachte Ausführungsformen der Erfindung beschrieben sind. Die einzelnen Merkmale der unterschiedlichen Ausführungsform können beliebig kombiniert werden, um die Erfindung auszuführen.

### Bezugszeichen

- 1: Druckvorrichtung
- 2: Erfassungseinrichtung
- 3: Speicher
- 4: Speicher
- 5: digitale Druckeinrichtung
- 6: Längsantrieb
- 7: Querantrieb
- 8: Druckkopf
- 9a-9h: Teildruckköpfe
- 10a-10d: erste Reservoirs
- 11a-11d: erste Farbformulierungen
- 12a-12d: zweite Reservoirs
- 13a-13d: zweite Farbformulierungen
- 14: Substrat
- 15: Längsrichtung
- 16: Querrichtung
- 17: Druckstück
- 20: Farbraumdiagramm
- 30: Druckstück
- 31: Pixel
- 32, 33: Subpixel
- 34: Schachfeld
- 35: Gesichtsbild
- 41: Hintergrund
- 42: Strichcode

## Patentansprüche

1. Druckvorrichtung (1) zum Herstellen von Sicherheits- und/oder Wertdruckstücken (17), umfassend
eine Erfassungseinrichtung (2) zum Erfassen von ersten, vorzugsweise individualisierenden, Druckinformationen,
eine Steuereinheit (4),
mindestens ein erstes Reservoir (10a), in dem mindestens eine erste Farbformulierung (11a) vorgehalten ist, und
eine digitale Druckeinrichtung (5), mit der gesteuert durch die Steuereinheit (4) die mindestens eine Farbformulierung (11a) auf ein Substrat (14) aufbringbar ist, um das Substrat (14) mit den ersten Druckinformationen zu bedrucken und hierdurch das Sicherheit- und/oder Wertdruckstück (17) zu erzeugen,
**dadurch gekennzeichnet, dass**
mindestens ein zweites Reservoir (12a) mit der digitalen Druckeinrichtung (5) gekoppelt ist, in dem mindestens eine zweite Farbformulierung (13a) vorgehalten ist, die sich von der mindestens einen ersten Farbformulierung (11a) unterscheidet und in einem verdruckten Zustand mindestens ein physikalisches Unterscheidungsmerkmal zu der verdruckten mindestens einen ersten Farbformulierung (11a) aufweist, und
die Erfassungseinrichtung (2) ausgebildet ist zusätzlich zweite Druckinformationen zu empfangen und die Steuereinheit (4) ausgebildet ist,
die digitale Druckeinrichtung (5) beim Bedrucken unter Verwendung der mindestens einen zweiten Farbformulierung (13a) so anzusteuern, dass die erste Druckinformation und die zweite Druckinformation in dem Druckstück (17) gespeichert werden und für einen menschlich Betrachter des bedruckten Druckstücks (17) bei einer Sichtprüfung ausschließlich die Druckinformationen in der Weise wahrnehmbar sind, die sich bei einer Bedruckung ohne Verwendung der mindestens einen zweiten Farbformulierung (13a) ergäben, und die zweiten Druckinformationen bei einer Auswertung des bedruckten Druckstücks (17) unter Ausnutzung des mindestens einen physikalischen Unterscheidungsmerkmals wahrnehmbar sind, wobei zusätzlich ein oder mehrere weitere erste Reservoirs (10b-10d) vorgesehen sind, die weitere erste Farbformulierungen (11b-11d) umfassen, die sich hinsichtlich des mindestens einen physikalischen Merkmals im verdruckten Zustand von der mindestens einen zweiten Farbformulierung (13a) unterscheiden und die mindestens eine zweite Farbformulierung (13a) einen metameren Farbeindruck zu einem Farbton hervorruft, der in dem Farbraum liegt, der mittels der mindestens einen und der einen oder den mehreren weiteren ersten Farbformulierungen (11a-11d) darstellbar ist.

2. Druckvorrichtung (1) nach Anspruch 1, **dadurch gekennzeichnet, dass** die mindestens eine zweite Farbformulierung (13a) eine zu der mindestens einen ersten Farbformulierung (11a) metamere Farbformulierung ist.

3. Druckvorrichtung (1) nach einem der Ansprüche 1 oder 2, **dadurch gekennzeichnet, dass** zusätzlich ein oder mehrere weitere zweite Reservoirs (12b-12d) vorgesehen sind, die weitere zweite Farbformulierungen (13b-13d) umfassen, die sich im verdruckten Zustand hinsichtlich des physikalischen Unterscheidungsmerkmal oder eines weiteren physikalischen Unterscheidungsmerkmal von der mindestens einen ersten Farbformulierung (11a) und/oder den weiteren ersten Farbformulierungen (11 b-11d) unterscheiden.

4. Druckvorrichtung (1) nach einem der Ansprüche 1 bis 3, **dadurch gekennzeichnet, dass** die ersten Farbformulierungen (11a-11d) aus einem ersten Farbsystem und die zweiten Farbformulierungen (13a-13d) aus einem zweiten Farbsystem ausgewählt sind, wobei die mittels der beiden Farbsysteme darstellbaren Farbräume eine nicht leere Schnittmenge umfassen und die zweiten Druckinformationen in Farbtönen aus der Schnittmenge dieser Farbräume gedruckt werden.

5. Druckvorrichtung (1) nach einem der Ansprüche 1 bis 4, **dadurch gekennzeichnet, dass** die mindestens eine erste Farbformulierung (11a) oder die eine weitere oder mehreren weiteren ersten Farbformulierungen (11b-11d) nach einer ersten Rasterart und die mindestens eine zweite Farbformulierung (13a) oder die eine weitere oder mehreren weiteren zweiten Farbformulierungen (13b-13d) nach einer zweiten Rasterart aufgebracht werden, wobei das erste Rasterart ein Frequenzraster und die zweite Rasterart ein Amplitudenraster sind oder umgekehrt.

6. Druckvorrichtung (1) nach einem der Ansprüche 1 bis 5, **dadurch gekennzeichnet, dass** die digitale Druckvorrichtung (5) eine Tintenstrahldruckvorrichtung oder eine Laserdruckvorrichtung ist.

7. Verfahren zum Herstellen von Sicherheits- und/oder Wertdruckstücken (17), umfassend Erfassen von ersten Druckinformationen,
Vorhalten mindestens einer ersten Farbformulierung (11a) und
Ansteuern einer digitale Druckeinrichtung (5), um mittels Digitaldruck ein Substrat (14) mit den ersten Druckinformationen zu bedrucken und hierdurch das Sicherheits- und/oder Wertdruckstück (17) zu erzeugen,
**dadurch gekennzeichnet, dass**
mindestens eine zweite Farbformulierung (13a) vorgehalten wird, die sich von der mindestens ersten Farbformulierung (11a) unterscheidet und in einem verdruckten Zustand mindestens ein physikalisches Unterscheidungsmerkmal zu der verdruckten mindestens einen ersten Farbformulierung (11a) aufweist, und
zusätzlich zweite Druckinformationen erfasst werden und die digitale Druckeinrichtung (5) so angesteuert wird, dass unter Verwendung der mindestens einen zweiten Farbformulierung (13a) die erste Druckinformation und die zweite Druckinformation so auf das Druckstück zur Speicherung gedruckt werden, dass für einen menschlich Betrachter des bedruckten Sicherheits- und/oder Wertdruckstücks bei einer Sichtprüfung ausschließlich die Druckinformationen in der Weise wahrnehmbar ist, die sich bei einer Bedruckung ohne Verwendung der mindestens einen zweiten Farbformulierung (13a) ergäbe, und die zweite Druckinformationen bei einer Auswertung des bedruckten Sicherheits- und/oder Wertdruckstücks (17) unter Ausnutzung des mindestens einen physikalischen Unterscheidungsmerkmals wahrnehmbar sind, wobei zusätzlich ein oder mehrere weitere erste Farbformulierungen (13b-13d) vorgehalten werden, die sich hinsichtlich des mindestens einen physikalischen Merkmals im verdruckten Zustand von der mindestens einen zweiten Farbformulierung (13a) unterscheiden und die mindestens eine zweite Farbformulierung (13a) einen metameren Farbeindruck zu einem Farbton hervorruft, der in dem Farbraum liegt, der mittels der mindestens einen und der einen oder den mehreren weiteren ersten Farbformulierungen (11a-11d) darstellbar ist oder dargestellt wird.

8. Verfahren nach Anspruch 7, **dadurch gekennzeichnet, dass** als die mindestens eine zweite Farbformulierung (13a) eine zu der mindestens einen Farbformulierung (11a) metamere Farbformulierung vorgehalten wird.

9. Verfahren nach einem der Ansprüche 7 oder 8, **dadurch gekennzeichnet, dass** zusätzlich ein oder mehrere weitere zweite Farbformulierungen (13b-13d) vorgehalten werden, die sich im verdruckten Zustand hinsichtlich des physikalischen Unterscheidungsmerkmals oder eines weiteren physikalischen Unterscheidungsmerkmals von der mindestens einen ersten Farbformulierung (11a) und/oder den weiteren ersten Farbformulierungen (11 b-11 d) unterscheiden.

10. Verfahren nach einem der Ansprüche 7 bis 9, **dadurch gekennzeichnet, dass** die ersten Farbformulierungen (11a-11d) aus einem ersten Farbsystem und die zweiten Farbformulierungen (13a-13d) aus einem zweiten Farbsystem ausgewählt werden, wobei die mittels der beiden Farbsysteme darstellbaren Farbräume eine nicht leere Schnittmenge umfassen und die zweiten Druckinformationen in Farbtönen aus der Schnittmenge dieser Farbräume gedruckt werden.

11. Verfahren nach einem der Ansprüche 7 bis 10, **dadurch gekennzeichnet, dass** die mindestens eine erste Farbformulierung (11a) und/oder die eine weitere oder mehreren weiteren ersten Farbformulierungen (11b-11d) nach einer ersten Rasterart und die die mindestens eine zweite Farbformulierung (13a) und/oder die eine weitere oder mehrere weiteren zweiten Farbformulierungen (13b-13d) nach einer zweiten Rasterart aufgebracht werden, wobei das erste Rasterart ein Frequenzraster und die zweite Rasterart ein Amplitudenraster sind oder umgekehrt.

12. Verfahren nach einem der Ansprüche 7 bis 11, **dadurch gekennzeichnet, dass** das digitale Bedrucken mittels einer Tintenstrahldruckvorrichtung oder eine Laserdruckvorrichtung ausgeführt wird.

## Claims

1. Printing apparatus (1) for the production of printed security and/or valuable products (17), comprising
an acquisition device (2) for acquiring first, preferably individualized, printing information,
a control unit (4),
at least one first reservoir (10a), in which at least one first ink formulation (11a) is kept ready, and
a digital printing device (5), with which, under control of the control unit (4), the at least one ink formulation (11a) can be applied to a substrate (14), in order to print the substrate (14) with the first printing information and in this way to produce the printed security and/or valuable product (17),
**characterized in that**
at least one second reservoir (12a) is coupled with the digital printing device (5), in which reservoir there is kept ready at least one second ink formulation (13a), which differs from the at least one first ink formulation (11a) and, in a printed state, exhibits at least one physical distinguishing feature from the printed at least one first ink formulation (11a), and
the acquisition device (2) is designed additionally to receive second printing information, and the control unit (4) is designed to activate the digital printing device (5), when printing by using the at least one second ink formulation (13a), in such a way that the first printing information and the second printing information are stored in the printed product (17) and, for a human viewer of the printed product (17) during a visual inspection, it is possible to perceive only the printing information which would result in the event of printing without using the at least one second ink formulation (13a) and, during an evaluation of the printed product (17), it is possible to perceive the second printing information by utilizing the at least one physical distinguishing feature, in addition one or more further first reservoirs (10b-10d) being provided which comprise further first ink formulations (11b-11d) which, in the printed state, differ with respect to the at least one physical feature from the at least one second ink formulation (13a), and the at least one second ink formulation (13a) giving rise to a metameric colour impression in relation to a hue which lies in the colour space which can be represented by means of the at least one and the one or the more further first ink formulations (11a-11d).

2. Printing apparatus (1) according to Claim 1, **characterized in that** the at least one second ink formulation (13a) is an ink formulation that is metameric in relation to the at least one first ink formulation (11a).

3. Printing apparatus (1) according to either of Claims 1 and 2, **characterized in that**, in addition, one or more further second reservoirs (12b-12d) are provided, which comprise further second ink formulations (13b-13d) which, in the printed state, differ with respect to the physical distinguishing feature or a further physical distinguishing feature from the at least one first ink formulation (11a) and/or the further first ink formulations (11b-11d).

4. Printing apparatus (1) according to one of Claims 1 to 3, **characterized in that** the first ink formulations (11a-11d) are selected from a first ink system and the second ink formulations (13a-13d) are selected from a second ink system, the colour spaces that can be represented by means of the two ink systems comprising a non-empty subset, and the second printing information being printed in hues from the subset of these colour spaces.

5. Printing apparatus (1) according to one of Claims 1 to 4, **characterized in that** the at least one first ink formulation (11a) or the one or more further first ink formulations (11b-11d) are applied in accordance with a first type of pattern, and the at least one second ink formulation (13a) or the one or more further second ink formulations (13b-13d) are applied in accordance with a second type of pattern, the first type of pattern being a frequency pattern and the second type of pattern being an amplitude pattern or vice versa.

6. Printing apparatus (1) according to one of Claims 1 to 5, **characterized in that** the digital printing apparatus (5) is an inkjet printing apparatus or a laser printing apparatus.

7. Method for the production of printed security and/or valuable products (17), comprising
acquisition of first printing information,
keeping ready at least one first ink formulation (11a) and
activating a digital printing device (5) in order by means of digital printing to print a substrate (14) with the first printing information and in this way to produce the printed security and/or valuable product (17),
**characterized in that**
at least one second ink formulation (13a) is kept ready, which differs from the at least one first ink formulation (11a) and, in a printed state, exhibits at least one physical distinguishing feature in relation to the printed at least one first ink formulation (11a), and
in addition second printing information is acquired and the digital printing device (5) is activated in such a way that, by using the at least one second ink formulation (13a), the first printing information and the second printing information are printed on the printed product for the purpose of storage such that, for a human viewer of the printed security or valuable product during a visual inspection, it is possible to perceive only the printing informations which would result in the event of printing without using the at least one second ink formulation (13a) and, during an evaluation of the printed security and/or valuable product (17), it is possible to perceive the second printing information by utilizing the at least one physical distinguishing feature, in addition one or more further first ink formulations (13b-13d) being kept ready which, in the printed state, differ with respect to the at least one physical feature from the at least one second ink formulation (13a), and the at least one second ink formulation (13a) giving rise to a metameric colour impression in relation to a hue which lies in the colour space which is or can be represented by means of the at least one and the one or the more further first ink formulations (11a-11d).

8. Method according to Claim 7, **characterized in that** the at least one second ink formulation (13a) that is kept ready is an ink formulation that is metameric in relation to the at least one first ink formulation (11a).

9. Method according to either of Claims 7 and 8, **characterized in that**, in addition, one or more further second ink formulations (13b-13d) are kept ready which, in the printed state, differ with respect to the physical distinguishing feature or a further physical distinguishing feature from the at least one first ink formulation (11a) and/or the further first ink formulations (11b-11d).

10. Method according to one of Claims 7 to 9, **characterized in that** the first ink formulations (11a-11d) are selected from a first ink system and the second ink formulations (13a-13d) are selected from a second ink system, the colour spaces that can be represented by means of the two ink systems comprising a non-empty subset, and the second printing information being printed in hues from the subset of these colour spaces.

11. Method according to one of Claims 7 to 10, **characterized in that** the at least one first ink formulation (11a) and/or the one or more further first ink formulations (11b-11d) are applied in accordance with a first type of pattern, and the at least one second ink formulation (13a) and/or the one or more further second ink formulations (13b-13d) are applied in accordance with a second type of pattern, the first type of pattern being a frequency pattern and the second type of pattern being an amplitude pattern or vice versa.

12. Method according to one of Claims 7 to 11, **characterized in that** the digital printing is carried out by means of an inkjet printing apparatus or a laser printing apparatus.

## Revendications

1. Dispositif d'impression (1) pour fabriquer des imprimés de sécurité et/ ou de valeur (17) comprenant
un dispositif d'enregistrement (2) pour enregistrer des premières informations d'impression, de préférence individualisées,
une unité de commande (4),
au moins un premier réservoir (10a), dans lequel est mise à disposition au moins une première formulation d'encres (11a), et
un dispositif d'impression numérique (5) avec lequel l'au moins une formulation d'encres (11a) peut être appliquée de manière commandée par l'unité de commande (4) sur un substrat (14) afin d'imprimer le substrat (14) avec les première informations d'impression et de générer par là-même l'imprimé de sécurité et/ ou de valeur (17),
**caractérisé en ce**
**qu'**au moins un second réservoir (12a) est couplé au dispositif d'impression numérique (5), dans lequel au moins une seconde formulation d'encres (13a) est mise à disposition, laquelle se distingue de l'au moins une première formulation d'encres (11a) et présente, dans un état imprimé, au moins une caractéristique physique par rapport à l'au moins une première formulation d'encres (11a) imprimée, et le dispositif d'enregistrement (2) est réalisé afin de recevoir en outre des secondes informations d'impression et l'unité de commande (4) est réalisée afin de commander le dispositif d'impression numérique (5) lors de l'impression en utilisant l'au moins une seconde formulation d'encres (13a) de sorte que la première information d'impression et la seconde information d'impression soient enregistrées dans l'imprimé (17) et pour un observateur humain de l'imprimé (17) imprimé, les informations d'impression soient exclusivement perceptibles lors d'un contrôle visuel de la manière dont il résulterait lors d'une impression sans utiliser l'au moins une seconde formulation d'encres (13a) et les secondes informations d'impression soient perceptibles lors d'une évaluation de l'imprimé (17) imprimé en utilisant l'au moins une caractéristique physique, un ou plusieurs autres premiers réservoirs (10b-10d) étant en outre prévus, lesquels comprennent d'autres premières formulations d'encre (11b-11d) qui se distinguent en ce qui concerne l'au moins une caractéristique physique à l'état imprimé de l'au moins une seconde formulation d'encres (13a) et l'au moins une seconde formulation d'encres (13a) suscite un effet de couleur métamérique formant une teinte qui se trouve dans l'espace chromatique pouvant être représenté à l'aide d'au moins une et de l'une ou des plusieurs autres premières formulations d'encres (11a-11d).

2. Dispositif d'impression (1) selon la revendication 1, **caractérisé en ce que** l'au moins une seconde formulation d'encres (13a) est une formulation d'encres métamérique par rapport à l'au moins une première formulation d'encres (11a).

3. Dispositif d'impression (1) selon l'une quelconque des revendications 1 ou 2, **caractérisé en ce qu'**en outre, un ou plusieurs autres seconds réservoirs (12b-12d) sont prévus, lesquels comprennent d'autres secondes formulations d'encres (13b-13d) qui se distinguent à l'état imprimé en ce qui concerne la caractéristique physique ou une autre caractéristique physique de l'au moins une première formulation d'encres (11a) et/ou des autres premières formulations d'encres (11b-11d).

4. Dispositif d'impression (1) selon l'une quelconque des revendications 1 à 3, **caractérisé en ce que** les premières formulations d'encres (11a-11d) sont sélectionnées dans un premier système de couleurs et les secondes formulations d'encres (13a-13d) dans un second système de couleurs, les espaces chromatiques pouvant être représentés par les deux systèmes de couleurs comprenant un ensemble de coupure non vide et les secondes informations d'impression étant imprimées dans des teintes de l'ensemble de coupure de ces espaces chromatiques.

5. Dispositif d'impression (1) selon l'une quelconque des revendications 1 à 4, **caractérisé en ce que** l'au moins une première formulation d'encres (11a) ou l'une autre ou plusieurs autres premières formulations d'encres (11b-11d) sont appliquées selon un première type de trame et l'au moins une seconde formulation d'encres (13a) ou l'une autre ou plusieurs autres secondes formulations d'encres (13b-13d) selon un second type de trame, le premier type de trame étant une trame de fréquences et le second type de trame étant une trame d'amplitudes ou inversement.

6. Dispositif d'impression (1) selon l'une quelconque des revendications 1 à 5, **caractérisé en ce que** le dispositif d'impression numérique (5) est un dispositif d'impression à jet d'encre ou un dispositif d'impression au laser.

7. Procédé pour fabriquer des imprimés de sécurité et/ou de valeur (17) comprenant l'enregistrement de premières informations d'impression,
la mise à disposition au moins d'une première formulation d'encres (11a) et
la commande d'un dispositif d'impression numérique (5) afin d'imprimer par impression numérique un substrat (14) avec les premières informations d'impression et de générer par là-même l'imprimé de sécurité et/ou de valeur (17), **caractérisé en ce**
**qu'**au moins une seconde formulation d'encres (13a) est mise à disposition, laquelle se distingue de l'au moins première formulation d'encres (11a) et présente à l'état imprimé au moins une caractéristique physique par rapport à l'au moins une première formulation d'encres (11a) imprimée et en outre, des secondes informations d'impression sont enregistrées et le dispositif d'impression numérique (5) est commandé de sorte qu'en utilisant l'au moins une seconde formulation d'encres (13a), la première information d'impression et la seconde information d'impression (13a) sont imprimées sur l'imprimé à des fins d'enregistrement de sorte que pour un observateur humain de l'imprimé de sécurité et/ou de valeur imprimé, les informations d'impression soient exclusivement perceptibles lors d'un contrôle visuel de la manière dont il résulterait lors d'une impression sans utiliser l'au moins une seconde formulation d'encres (13a), et les secondes informations d'impression sont perceptibles lors d'une évaluation de l'imprimé de sécurité et/ou de valeur imprimé (17) en utilisant l'au moins une caractéristique physique, une ou plusieurs autres premières formulations d'encres (13b-13d) étant en outre mises à disposition, lesquelles se distinguent en ce qui concerne l'au moins une caractéristique physique à l'état imprimé de l'au moins une seconde formulation d'encres (13a) et l'au moins une seconde formulation d'encres (13a) suscite un effet de couleur métamérique formant une teinte qui se trouve dans l'espace chromatique pouvant être représenté ou étant représenté à l'aide de l'au moins une ou de l'une ou des plusieurs autres premières formulations d'encres (11a-11d).

8. Procédé selon la revendication 7, **caractérisé en ce qu'**une formulation d'encres métamérique par rapport à l'au moins une formulation d'encres (11a) est mise à disposition comme l'au moins une seconde formulation d'encres (13a).

9. Procédé selon l'une quelconque des revendications 7 ou 8, **caractérisé en ce qu'**en outre, une ou plusieurs autres secondes formulations de couleur (13b-13d) sont mises à disposition, lesquelles se distinguent à l'état imprimé en ce qui concerne la caractéristique physique ou une autre caractéristique physique de l'au moins une première formulation d'encres (11a) et/ou des autres premières formulations d'encres (11b-11d).

10. Procédé selon l'une quelconque des revendications 7 à 9, **caractérisé en ce que** les premières formulations d'encres (11a-11d) sont sélectionnées dans un premier système de couleurs et les secondes formulations d'encres (13a-13d) sont sélectionnées dans un second système de couleurs, les espaces chromatiques pouvant être représentés par les deux systèmes de couleurs comprenant un ensemble de coupure non vide et les secondes informations de couleur étant imprimées dans des teintes de l'ensemble de coupure de ces espaces chromatiques.

11. Procédé selon l'une quelconque des revendications 7 à 10, **caractérisé en ce que** l'au moins une première formulation d'encres (11a) et/ou l'une autre ou plusieurs autres premières formulations d'encres (11b-11d) sont appliquées selon un premier type de trame et l'au moins une seconde formulation d'encres (13a) et/ou l'une autre ou plusieurs autres secondes formulations d'encres (13b-13d) sont appliquées selon un second type de trame, le premier type de trame étant une trame de fréquences et le second type de trame une trame d'amplitudes ou inversement.

12. Procédé selon l'une quelconque des revendications 7 à 11, **caractérisé en ce que** l'impression numérique est réalisée à l'aide d'un dispositif d'impression à jet d'encre ou un dispositif d'impression au laser.
